# FASCICULE DE BREVET EUROPEEN

(11) **EP 0 620 473 B1**
(45) Date de publication et mention de la délivrance du brevet: **15.10.1997**
(21) Numéro de dépôt: 94400815.0
(22) Date de dépôt: 14.04.1994
(51) Int. Cl.: G02F 1/1345, H01R 4/04

(54) **Procédé de réalisation d'une cellule d'affichage avec reprise de contact de contre-électrode**
Verfahren zur Herstellung einer Anzeigezelle mit Kontaktierung für die Gegen-Elektrode
Method of making a display cell with realisation of the contact for the counter-electrode

(30) Priorité: 15.04.1993 FR 9304443
(43) Date de publication de la demande: 19.10.1994
(73) Titulaire: FRANCE TELECOM, 75015 Paris (FR); SOCIETE D'APPLICATIONS GENERALES D'ELECTRICITE ET DE MECANIQUE SAGEM, F-75016 Paris (FR)
(72) Inventeur: Vinouze, Bruno, F-22700 Port-Blanc (FR); Moreno, Jean-Yves, F-76300 Sotteville Les Rouen (FR); Lacroix, François, F-22300 Lannion (FR)
(74) Mandataire: Signore, Robert

(56) Documents cités:
- DE-A- 2 240 781
- DE-A- 2 722 387
- US-A- 4 600 273
- PATENT ABSTRACTS OF JAPAN vol. 006, no. 125 (P-127) 10 Juillet 1982 & JP-A-57 052 027 (TOSHIBA CORP) 27 Mars 1982

## Description

### Domaine technique

La présente invention a pour objet un procédé de réalisation d'une cellule d'affichage avec reprise de contact de contre-électrode. Elle trouve une application dans la réalisation d'écrans d'affichage, notamment à cristaux liquides.

### Etat de la technique antérieure

Une cellule d'affichage à cristaux liquides comprend généralement une première plaque transparente recouverte d'une contre-électrode et une seconde plaque, également transparente, recouverte de lignes et de colonnes d'adressage, et, dans le cas des écrans dits à matrice active, d'une matrice de transistors de commande et de pixels. Ces deux plaques sont tenues écartées par des espaceurs et forment un volume rempli de cristal liquide.

La contre-électrode est en général constituée par une fine couche d'oxyde d'indium et d'étain (ITO). Elle peut être complétée par un masque optique ou par des filtres colorés.

JP-A-57-52 027 divulgue une cellule d'affichage dans laquelle la plaque comportant les électrodes de commande n'est pas recouverte par une couche de passivation isolante. La liaison électrique entre la contre-électrode et les contacts est établie par des plots en pâte à l'argent disposés directement sur les contacts.

Les figures annexées 1 et 2 illustrent un procédé classique de réalisation d'une telle cellule, l'accent étant mis sur la manière de réaliser la connexion électrique entre la contre-électrode et les circuits de commande placés à l'extérieur de la cellule.

Pour réaliser une telle cellule, on réalise une première plaque P1, dite plaque de contre-électrode, par exemple en verre, sur laquelle on dépose la contre-électrode CE.

On réalise, par ailleurs, une seconde plaque P2, dite plaque d'électrodes, par exemple en verre, sur laquelle on dépose un réseau de lignes L et de colonnes C d'adressage, et une matrice de pixels Px. Les connexions électriques se font en bout de lignes et en bout de colonnes. Cette seconde plaque peut être réalisée en deux niveaux de masquage comme décrit dans le document FR-A-2 533 072.

Pour réaliser la connexion électrique de la contre-électrode CE, plutôt que de prévoir cette connexion directement sur la plaque de contre-électrode P1, on préfère établir cette connexion sur la plaque d'électrodes P2, avec les autres connexions. A cette fin, il est prévu des contacts particuliers 20, disposés par exemple aux quatre coins de la plaque d'électrodes et constitués d'un métal bon conducteur, par exemple de l'aluminium. Naturellement, cela impose d'établir une liaison entre la contre-électrode CE et ces contacts 20. Des plots conducteurs 12, par exemple en pâte à l'argent, sont donc disposés sur la contre-électrode, en des emplacements correspondant aux emplacements des contacts 20, c'est-à-dire, dans la variante illustrée, dans les quatre coins de la contre-électrode.

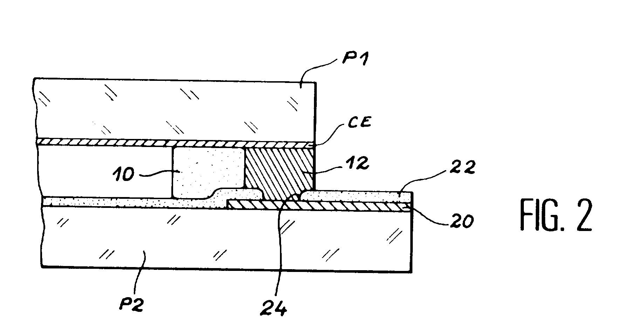

Pour éviter des phénomènes électrochimiques et prévenir également d'éventuels court-circuits entre les plaques, on recouvre généralement la plaque d'électrodes P2 d'une couche de passivation isolante. Il peut s'agir, par exemple, d'une couche de 300 nm de nitrure de silicium. Cette couche recouvrant les contacts 20, il est nécessaire, pour établir la liaison électrique entre la contre-électrode CE et les contacts 20, de percer cette couche aux endroits correspondant aux contacts. C'est ce qui est représenté sur la figure 2 où l'on voit, en coupe, la zone d'établissement de la liaison électrique entre la contre-électrode CE et un contact 20, à travers une ouverture 24 percée dans la couche de passivation 22, et par l'intermédiaire du plot 12 en pâte à l'argent.

Les ouvertures 24 sont obtenues par une opération complète de photolithographie avec résinage, alignement, insolation et développement de la résine, gravure de la couche de passivation et élimination de la résine.

Les deux plaques P1 et P2 ayant été réalisées et la couche de passivation ayant été gravée aux endroits appropriés, le procédé de réalisation de la cellule se poursuit par le dépôt d'une couche d'alignement sur la plaque d'électrodes P2, puis par la pulvérisation d'espaceurs. Sur la plaque de contre-électrode P1, on dépose une couche d'alignement, puis on sérigraphie un cordon de colle polymérisable 10 puis on dépose des plots 12 de pâte à l'argent avec une seringue aux endroits appropriés. Après assemblage des deux plaques, on recuit l'ensemble pour polymériser la colle et la pâte à l'argent.

Si ce procédé donne satisfaction, il est clair que les opérations de gravure des ouvertures 24 dans la couche de passivation 22 pénalisent lourdement le procédé qui, sans cette gravure supplémentaire, resterait simple puisque ne nécessitant que deux photogravures, tout au moins dans la variante décrite dans le document FR-A-2 533 072 déjà cité.

La présente invention a justement pour but de remédier à cet inconvénient. A cette fin, elle propose un procédé de réalisation qui permet de conserver la couche de passivation sans toutefois nécessiter de photolithographie supplémentaire pour établir la liaison électrique entre la contre-électrode et ses contacts.

### Exposé de l'invention

Selon l'invention, on établit la liaison électrique par la surface extérieure des plots, l'extrémité des contacts ayant été préalablement découverte.

De façon précise, l'invention a pour objet un procédé de réalisation d'une cellule d'affichage dans lequel, de façon connue :
- on dépose sur une première plaque transparente une contre-électrode,
- on dépose sur le pourtour de la contre-électrode un cordon de colle polymérisable,
- on dépose sur la contre-électrode, à l'extérieur du cordon de colle, en des emplacements appropriés, des plots de contact,
- on dépose sur une seconde plaque des lignes et des colonnes d'adressage et des électrodes de pixels,
- on forme des contacts de connexion de contre-électrode à la périphérie de cette seconde plaque,
- on dépose sur cette seconde plaque une couche de passivation isolante recouvrant entre autres les contacts de contre-électrode,
le procédé de l'invention étant caractérisé par le fait que :
- on assemble les deux plaques, les plots de contact portés par la première plaque se trouvant disposés au-dessus des contacts de contre-électrode portés par la seconde plaque mais restant séparés de ceux-ci par la couche de passivation,
- on polymérise la colle du cordon,
- on enlève au moins en partie, autour de l'assemblage des deux plaques, la couche de passivation recouvrant les contacts de contre-électrode,
- on établit une continuité électrique entre la contre-électrode et la partie découverte des contacts par l'extérieur des plots de contact.

De préférence :
- pour réaliser les plots de contact, on utilise une pâte à l'argent,
- on assemble les deux plaques et on polymérise le cordon de colle,
- on recuit l'assemblage pour polymériser la pâte à l'argent,
- on remplit la cellule,
- on grave la couche de passivation à l'extérieur de l'assemblage, ce qui dégage l'extrémité des contacts de contre-électrode,
- on applique une seconde pâte à l'argent sur les plots de contact et sur l'extrémité dégagée des contacts de contre-électrode,
- on polymérise cette seconde pâte à l'argent.

### Brève description des dessins

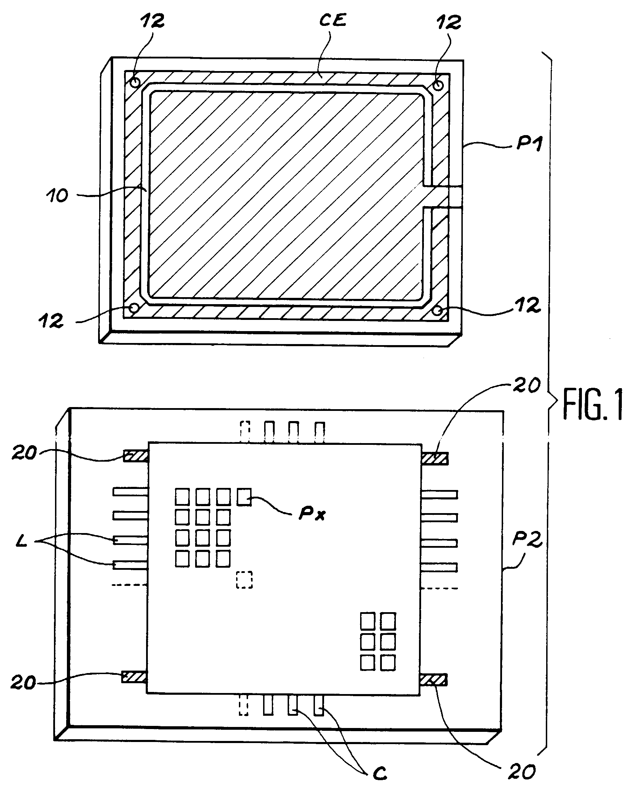

- la figure 1, déjà décrite, montre les deux plaques d'une cellule d'affichage ;
- la figure 2, déjà décrite, est une coupe d'une cellule selon l'art antérieur au niveau du contact de contre-électrode ;
- la figure 3 illustre trois étapes du procédé de l'invention ;
- la figure 4 illustre un mode de réalisation de caractère collectif mettant en oeuvre l'invention.

### Exposé détaillé de modes de réalisation

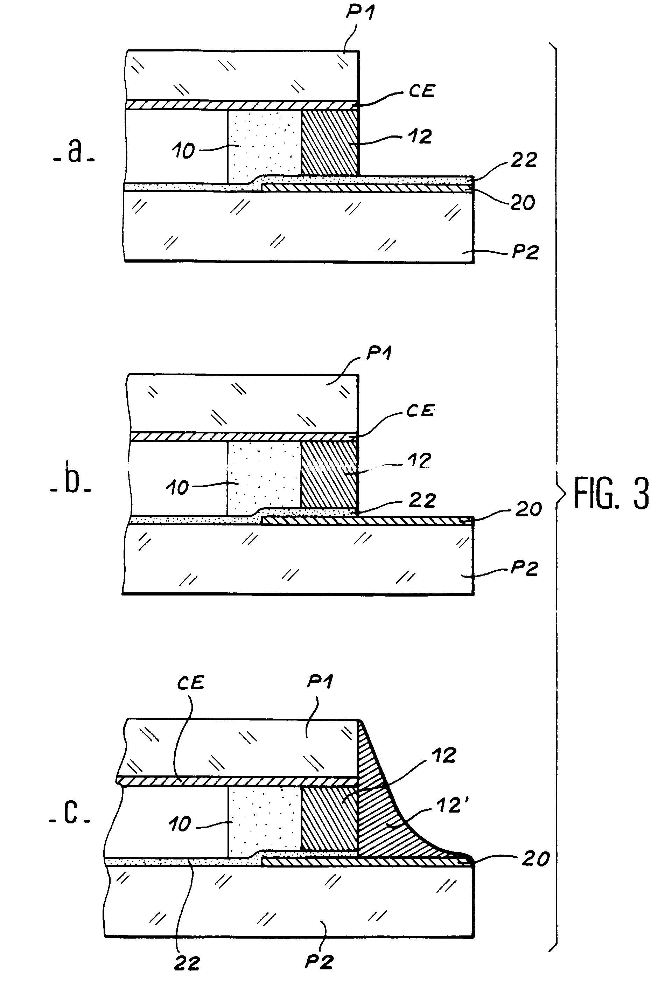

La figure 3 montre trois étapes du procédé de l'invention selon la première variante. Sur la partie (a), on voit la plaque P1 (avec sa contre-électrode CE, son cordon de colle 10, et ses plots de contact 12) reposant sur la plaque P2 avec ses contacts de contre-électrode 20 et sa couche de passivation 22.

La colle 10 peut être une colle polymérisable sous rayonnement ultraviolet comme la colle référencée UVS 91 chez NORLAND (pâte de scellement pour afficheurs à cristaux liquides-Réticulation UV) ou bien une colle polymérisable en température, comme la colle référencée DSA 001 chez RODIC.

Les plots 12 peuvent être en pâte à l'argent, par exemple une pâte référencée H20E chez NORLAND (résine conductrice chargée à l'argent).

Les deux plaques P1 et P2 ayant été assemblées puis pressées, la colle 10 est polymérisée, par exposition aux UV par exemple. Un recuit de 12 heures à 60°C permet d'améliorer l'adhérence de la colle et de polymériser la pâte à l'argent 12.

Après cette polymérisation, il n'y a pas encore de contact entre la contre-électrode CE et les contacts de reprise 20 car la couche de passivation 22 demeure sous la pâte à l'argent 12 (partie a).

Ensuite, on remplit la cellule de cristal liquide par les moyens habituels (de type capillarité sous vide) et, après remplissage, la cellule est scellée hermétiquement.

On procède alors à une gravure de la couche de passivation qui se trouve sur la partie extérieure de connexions. Pour ce faire, on introduit la cellule dans une machine de gravure par plasma sous vide, par exemple RIE 550 de la Société NEXTRAL. Un plasma composé de gaz fluoré, par exemple SF6, vient éliminer tout le nitrure de silicium qui n'est pas recouvert par la plaque de contre-électrode (partie b de la figure 3). Il est à noter qu'une cellule à cristal liquide scellée hermétiquement ne subit aucun dommage lors d'une telle gravure par plasma.

On applique ensuite une deuxième pâte à l'argent, par exemple 410LV de chez NORLAND, sur les bords de la contre-électrode, à l'endroit des plots de reprise de contact 20. Ces plots supplémentaires sont référencés 12' sur la partie (c) de la figure 3. Ils sont en appui sur les plots 12 déjà polymérisés et en contact avec ceux-ci. Cette deuxième pâte est à son tour polymérisée, par exemple à 60° pendant 4 heures.

Le contact électrique est alors établi entre la contre-électrode CE et les contacts 20 par l'intermédiaire de la première et de la seconde pâtes à l'argent 12 et 12'. La résistance de contact obtenue par cette méthode est de l'ordre de quelques dizaines d'Ohms.

Le procédé qui vient d'être décrit est compatible avec un procédé collectif de réalisation de cellules à cristaux liquides. On sait que, pour augmenter la productivité, il est possible de réaliser deux grandes plaques comportant, l'une, plusieurs motifs de contre-électrode et l'autre, autant de matrices actives. On assemble ces grandes plaques, on les traite thermiquement pour les coller l'une à l'autre, puis on casse l'ensemble selon des lignes appropriées 55 pour obtenir des cellules individuelles.

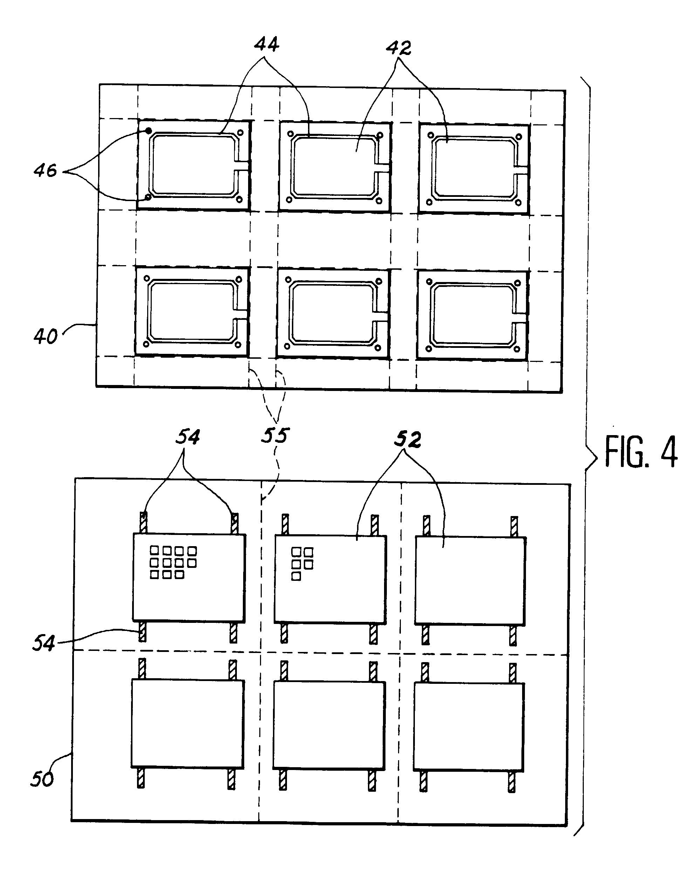

La figure 4 montre comment on peut s'y prendre avec le procédé de reprise de contact de la contre-électrode qui vient d'être décrit. On réalise une première grande plaque 40 avec des motifs de contre-électrode 42 (six dans l'exemple illustré). On réalise, par ailleurs, une seconde grande plaque 50 avec des matrices de pixels 52 et leurs contacts de contre-électrode 54.

Selon l'invention, on s'y prend alors comme suit :

On sérigraphie des cordons de colle 44 sur la plaque 40 et on dépose, à la seringue, des gouttes 46 de pâte à l'argent H20E dans les coins ménagés à cet effet. Un robot peut effectuer cette opération. Ensuite, on assemble les plaques 40 et 50 et la colle ainsi que la pâte à l'argent sont polymérisées.

Après découpe pour séparer les différentes cellules, celles-ci sont remplies de cristal liquide puis bouchées. Les contacts 54 sont alors dégagés par plasma. Ensuite on effectue le dépôt de la deuxième pâte à l'argent et sa polymérisation comme expliqué à propos de la figure 3c. Pour bien fonctionner, cette technique nécessite des précautions pour bien calibrer le volume de pâte à l'argent déposé après sérigraphie.

## Revendications

1. Procédé de réalisation d'une cellule d'affichage dans lequel :
- on dépose sur une première plaque transparente (P1) une contre-électrode (CE),
- on dépose sur le pourtour de la contre-électrode un cordon de colle polymérisable (10),
- on dépose sur la contre-électrode, à l'extérieur du cordon de colle (10), en des emplacements appropriés, des plots de contact (12),
- on dépose sur une seconde plaque (P2) des lignes (L) et des colonnes (C) d'adressage et des électrodes de pixels (Px),
- on forme des contacts de connexion de contre-électrode (20) à la périphérie de cette seconde plaque (P2),
- on dépose sur cette seconde plaque (P2) une couche de passivation isolante (22) recouvrant entre autres les contacts de contre-électrode (20),
- on assemble les deux plaques (P1, P2), les plots de contact (12) portés par la première plaque (P1) se trouvant disposés au-dessus des contacts de contre-électrode (20) portés par la seconde plaque (P2) mais restant séparés de ceux-ci par la couche de passivation (22),
- on polymérise la colle (10) du cordon,
- on enlève au moins en partie, autour de l'assemblage des deux plaques, la couche de passivation (22) recouvrant les contacts de contre-électrode (20),
- on établit une continuité électrique entre la contre-électrode (CE) et la partie découverte des contacts (20) par l'extérieur des plots de contact (12).

2. Procédé selon la revendication 1, dans lequel :
- on utilise une pâte à l'argent pour réaliser les plots de contact (12),
- on recuit l'assemblage pour polymériser la pâte à l'argent (12) après la polymérisation du cordon de colle (10),
- on remplit et on scelle la cellule,
- on grave la couche de passivation (22) à l'extérieur de l'assemblage, ce qui dégage l'extrémité des contacts de contre-électrode (20),
- on applique une seconde pâte à l'argent (12') sur les plots de contact (12) et sur l'extrémité dégagée des contacts de contre-électrode (20),
- on polymérise cette seconde pâte à l'argent (12').

3. Procédé selon la revendication 2, dans lequel on grave la couche de passivation (22) par plasma sous vide.

4. Procédé selon l'une quelconque des revendications 2 et 3, dans lequel :
- on réalise une première grande plaque (40) comportant plusieurs motifs de contre-électrode (42) et une seconde grande plaque (50) comprenant autant d'ensembles d'électrodes (52), avec des contacts de contre-électrode (54) et une couche de passivation,
- on dispose des cordons de colle polymérisable (44) sur la première grande plaque (40) autour des motifs de contre-électrode (42),
- on dépose sur la première grande plaque (40) des plots de contact (46),
- on assemble les deux grandes plaques (40, 50),
- on polymérise la colle des cordons (44),
- on découpe l'assemblage pour obtenir les cellules individuelles,
- on poursuit le procédé pour chaque cellule individuelles ainsi obtenue.

## Patentansprüche

1. Verfahren zur Herstellung einer Anzeigezelle, in welchem
- auf einer transparenten ersten Platte (P1) eine Gegenelektrode (CE) abgeschieden und
- am Umfang der Gegenelektrode ein Band (10) aus polymerisierbarem Klebstoff aufgebracht wird,
- auf der Gegenelektrode außerhalb des Klebebandes (10) an geeigneten Stellen Kontaktstifte (12) aufgebracht,
- auf einer zweiten Platte (P2) Adressierungszeilen (L) und -spalten (C) und Bildpunktelektroden (Px) aufgebracht und
- am Rand der zweiten Platte (P2) Anschlußkontakte (20) für die Gegenelektrode gebildet werden,
- auf dieser zweiten Platte (P2) eine isolierende Passivierungsschicht (22), die unter anderem die Anschlußkontakte (20) für die Gegenelektrode bedeckt, abgeschieden wird,
- die beiden Platten (P1, P2) miteinander verbunden werden, wobei sich die von der ersten Platte (P1) getragenen Kontaktstifte (12) über den von der zweiten Platte (P2) getragenen Anschlußkontakten (20) für die Gegenelektrode befinden, aber von diesen durch die Passivierungsschicht (22) getrennt bleiben,
- der Klebstoff des Bandes (10) polymerisiert,
- um den Verbund aus den beiden Platten herum die Passivierungsschicht (22), welche die Anschlußkontakte (20) für die Gegenelektrode bedeckt, wenigstens teilweise entfernt und
- zwischen der Gegenelektrode (CE) und dem entschichteten Teil der Anschlußkontakte (20) über die Außenfläche der Kontaktstifte (12) elektrische Kontinuität hergestellt wird.

2. Verfahren nach Anspruch 1, in welchem
- zur Herstellung der Kontaktstifte (12) eine Silberpaste verwendet,
- nach der Polymerisation des Klebebandes (10) der Verbund, um die Silberpaste (12) zu polymerisieren, erhitzt,
- - die Zelle gefüllt und versiegelt,
- die Passivierungsschicht (22) außerhalb des Verbundes graviert wird, wodurch das Ende der Anschlußkontakte (20) für die Gegenelektrode freigelegt,
- eine zweite Silberpaste (12') auf den Kontaktstiften (12) und dem freigelegten Ende der Anschlußkontakte (20) für die Gegenelektrode aufgebracht und
- die zweite Silberpaste (12') polymerisiert wird.

3. Verfahren nach Anspruch 2, in welchem die Passivierungsschicht (22) im Vakuum durch Plasma graviert wird.

4. Verfahren nach Anspruch 2 oder 3, in welchem
- eine erste großflächige Platte (40), die mehrere Gegenelektrodenmuster (42) enthält, und eine zweite großflächige Platte (50), die ebensoviele Elektrodeneinheiten (52) mit Anschlußkontakten (54) für die Gegenelektrode und einer Passivierungsschicht enthält, hergestellt wird,
- auf der ersten großflächigen Platte (40) um die Gegenelektrodenmuster (42) herum Bänder (44) aus polymerisierbarem Klebstoff angeordnet,
- auf der ersten großflächigen Platte (40) Kontaktstifte (46) aufgebracht und
- die beiden großflächigen Platten (40, 50) miteinander verbunden werden,
- der Klebstoff der Bänder (44) polymerisiert,
- um die einzelnen Zellen zu erhalten, der Verbund zerschnitten und
- das Verfahren für jede so erhaltene einzelne Zelle fortgesetzt wird.

## Claims

1. Method for embodying a display cell in which :
- a counter-electrode (CE) is placed on a first transparent plate (P1),
- a polymerizable glue cord (10) is placed on the circumference of the counter-electrode,
- contact blocks (12) are placed on the counter-electrode outside the glue cord (10) at appropriate locations,
- addressing lines (L) and columns (C) and pixel electrodes (Px) are placed on a second plate P2),
- counter-electrode connection contacts (10) are formed at the periphery of this second plate (P2),
- a non-conducting passivation film (22) is placed on this second plate (P2) and, apart from other elements, covers the counter-electrode contacts (20),
- the two plates (P1, P2) are assembled, the contact blocks (12) carried by the first plate (P1) being disposed above the counter-electrode contacts (20) carried by the second plate (P2) but remaining separate from the latter v ia the passivation film (22),
- the glue (10) of the cord is polymerized,
- at least one portion of the passivation film (22) coating the counter-electrode contacts (20) is removed around the assembly of the two plates,
- an electric continuity is established between the counter-electrode (CE) and the uncovered portion of the contacts (20) via the outside of the contact blocks (12).

2. Method according to claim 1, wherein :
- a silver paste is used for producing the contact blocks (12)
- the assembly is annealed so as to polymerize the silver paste (12) after polymerizing the glue cord (10)
- the cell is filled
- the passivation film (22) is etched outside the assembly which frees the extremity of the counter-electrode contacts (20),
- a second silver paste (12') is applied to the contact blocks (12) and to the freed extremity of the counter-electrode contacts (10),
- this second silver paste (12') is polymerized.

3. Method according to claim 2, wherein the passivation film (22) is etched by plasma under vacuum.

4. Method according to claim 2 or 3, wherein :
- a first large plate (40) is embodied comprising several counter-electrode patterns (42) and also a second large plate (50) having the same number of sets of electrodes (52) with counter-electrode contacts (54) and a passivation film
- polymerizable glue cords (44) are disposed on the first large plate (40) around the counter-electrode patterns (42),
- contact blocks (46) are placed on the first large plate (40),
- the two large plates (40, 50) are assembled,
- the glue of the cords (44) is polymerized,
- the method is is cut so as to obtain individual cells,
- the method is continued for each individual cell obtained.
